Europäisches Patentamt

European Patent Office

Office européen des brevets

(19)

(11) Publication number: **0 061 252**
**B1**

(12)

# EUROPEAN PATENT SPECIFICATION

(45) Date of publication of patent specification: **11.09.85**

(51) Int. Cl.⁴: **F 16 K 7/07, F 16 K 47/02**

(21) Application number: **82301186.1**

(22) Date of filing: **09.03.82**

(54) **Tube-diaphragm valve.**

(30) Priority: **13.03.81 IL 62359**

(43) Date of publication of application:
**29.09.82 Bulletin 82/39**

(45) Publication of the grant of the patent:
**11.09.85 Bulletin 85/37**

(84) Designated Contracting States:
**AT BE CH DE FR GB IT LI NL SE**

(56) References cited:
**FR-A-2 334 030**
**US-A-2 331 291**
**US-A-2 360 873**
**US-A-3 467 131**
**US-A-3 836 113**
**US-A-3 942 756**

(73) Proprietor: **MIL MUTZARIM TECHNIIM (1971) B.M.**
**Habanai Street 25**
**Ezor Hataasiah Holon (IL)**

(72) Inventor: **Zackay, Avi**
**38 Kaplinsky Street**
**Rishon-Le-Zion (IL)**

(74) Representative: **Walter, Douglas Ernest et al**
**HASELTINE LAKE & CO. 28, Southampton Buildings**
**London WC2A 1AT (GB)**

Courier Press, Leamington Spa, England.

## Description

This invention is concerned with flow valves and more particularly with the type of flow valves known as tube valves.

Tube valves are axial flow valves wherein a tube or sleeve is used for controlling flow through the valves. Such valves are shown for example in U.S. Patents US—A—3942756 and US—A—3838704 and in French Patent FR—A—2334030. The known valves generally have a pervious cage-like core extending from an inlet to an outlet of a casing surrounding the core. A resilient tube is fitted over the core between the casing and the core. A control chamber defined between the casing and the tube is used for operating the valve between closed and open positions. The closed position occurs when the tube abuts a central impervious barrier portion that transverses the longitudinal direction of the cage-like core.

Tube valves give excellent control over large volume flows. They are characterized by good reliability and longevity. However, the prior art tube valves are prone to the phenomena known as "water hammer". The water hammer problem can be diminished by using larger valves per volume of flow being controlled but, when a larger valve is used, the head loss through the valve increases in addition to the inherent additional costs of the larger valve.

Thus there is a problem of long-standing in reducing "water hammer effect" whilst still minimizing the size of the tube valves and it is a primary object of the present invention very greatly to reduce this potentially destructive effect by providing an improved form of the central impervious barrier portion without any essential increase in dimensions.

According to the present invention, there is provided

a tube valve for controlling hydraulic flow therethrough, said valve comprising;

valve casing means,

first and second port means longitudinally spaced apart in said casing means,

a hollow support structure having pervious walls extending in a longitudinal direction between said port means,

an impervious barrier transversing the longitudinal direction of said structure positioned to cause hydraulic flow through said pervious walls and around said barrier,

resilient tube means surrounding said structure and extending substantially from port to port,

said tube means having a valve closed position abutting said barrier thereby preventing flow around said barrier and a valve opened position removed from said barrier thereby enabling flow around said barrier,

said casing and said tube means defining a control chamber, and

aperture means in said casing to enable varying the pressure in said control chamber to move said tube means between said valve closed and said valve opened positions,

characterised in that said barrier comprises a central member against which said tube means abuts when said valve is in said closed position, and at least a first side member in contact with said central member disposed on the side of the port, serving as the outlet port, the diameter of said central member being greater than that of said first side member whereby, as said tube means moves toward said valve closed position, the differences between the diameters of said central member and side member of said barrier result in the production of a pressure, adjacent the central member on the side of the outlet port, which dampens the hammer effect caused by said tube means when moving from the valve open position to the valve closed position, by reducing the rate at which said tube means comes into contact with said central member.

US—A—3942756 discloses a superficially similar arrangement but without the particular structure and arrangement of the invention that provides the desired greatly reduced "water hammer" effect.

The operation and utilization of the present invention will be more fully apparent from the description of a preferred embodiment taken in conjunction with the accompanying drawings, in which

Figure 1 is a cross-sectional view of the inventive tube valve showing it in the closed position and in the completely open position,

Figure 2 is a cross-section view of the same valve showing it in the process of closing,

Figures 3a and 3b are schematic views of prior art tube valves to illustrate the water hammer effect, and

Figures 4a and 4b are schematic views of the improved valve in the process of closing to illustrate how the water hammer effect is minimized.

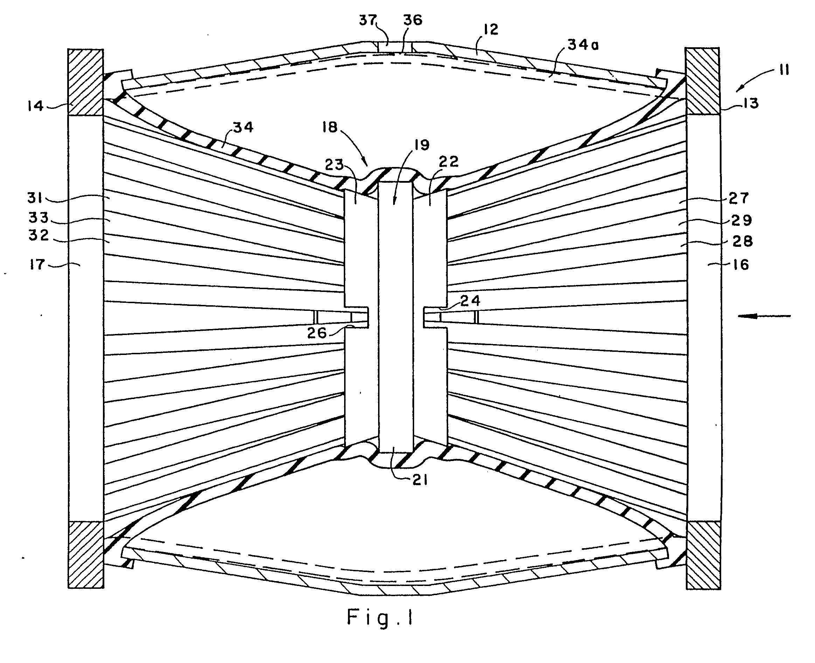

In Figure 1 the tube valve 11 is shown in cross-section view in its normal closed position. The valve comprises a casing having an outer wall 12 and end closures 13 and 14. The end closures are shown as having an inlet port 16 in end closure 13 and an outlet port 17 in end closure 14. It should be understood while 16 is referred to herein as an inlet port and 17 as an outlet port, the valve is shown as being symmetrically constructed so that flow can occur in either direction.

The valve further comprises a central core shown generally as 18. The core is comprised of a cage-like structure made up of an annular array of fingers extending from end enclosure 13 to a central barrier assembly 19 and from end enclosure 14 to the central barrier assembly 19.

The central barrier assembly 19 is shown as comprised of a centrally disposed cylindrical section 21 which has a larger diameter than a pair of truncated conical sections 22 and 23 on the inlet and outlet sides of the central cylindrical section 21, respectively. The conical sections 22 and 23 have their smaller diameters on those portions of the conical sections that abut the cylindrical section. Accordingly the conical sections flare away from the cylindrical section and grow larger as they extend towards the ends of the valve. The conical sections 22 and 23 also have peripheral slots therein shown as slots 24 and 26 on sections 22 and 23, respectively. These slots add to the damping effect that the conical sections have on the movement of the tubing. It should be noted that while two slots are shown, one on each of the conical sections, more slots can be utilized or the area (the cross-sectional area) of the slot can be varied, depending on the characteristic reaction desired from the valve.

The cage structure 18 is shown as comprising the annular array of fingers such as fingers 27 and 28 on the inlet side defining an inflow slot 29 and such as fingers 31 and 32 on the outlet side defining an outflow slot 33. The cage is normally abutted by the sleeve or tube 34 which is an elastic member normally stretched tightly over the cage so as to abut the central barrier assembly 19 and prevent any flow from the inlet to the outlet.

The casing 12 and the tube 34 define a control chamber 36. An aperture means, such as aperture 37 in casing 12 provides an entrance way to the control chamber. When the control chamber is attached to a fluid source at the same pressure as the inlet fluid supply, then the valve is retained in the closed position shown in the full line drawing of Fig. 1. If however the control chamber 36 is attached to a drain so that the inlet pressure is greater than the pressure in the control chamber, the valve then opens and the tube assumes the dashed line shape shown at 34a, for example. The valve can be used for throttling purposes in which case the tube assumes a position somewhere between the position of tube shown in 34 and 34a.

Note that the tube 34 is shown as held between the end closures and the casing. The manner of retaining the tube in place could be done in any manner well known to those skilled in the art.

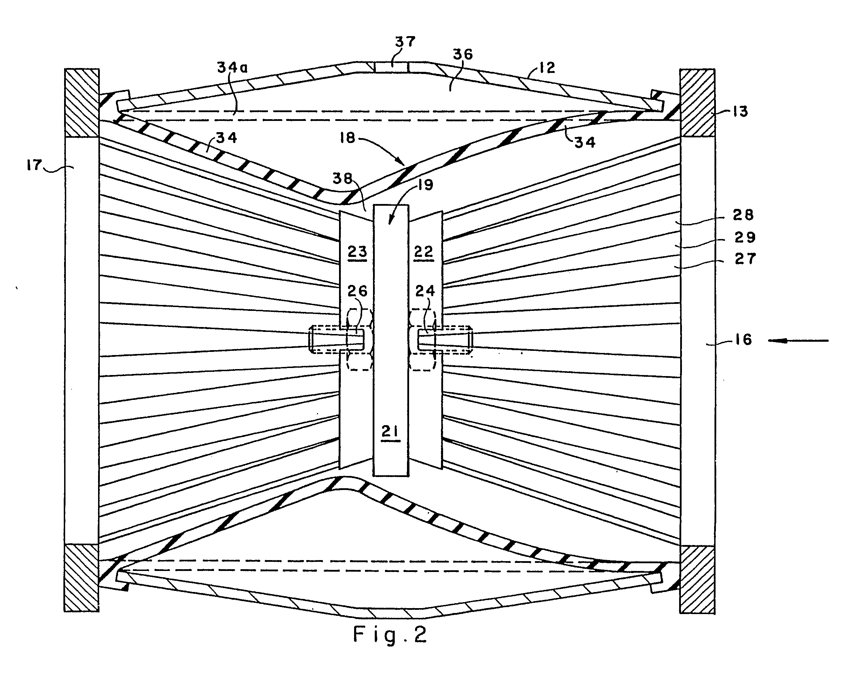

Fig. 2 shows the valve in the process of closing. To better show the improved features provided by the novel central barrier assembly 19, the numerical designations in Fig. 2 are the same as those of Fig. 1 wherever possible. In Fig. 2 the aperture 37 has been connected to the line pressure that is also connected to inlet 16. Accordingly, the control chamber 36 is at line pressure. Then the tube 34 moves towards the cage assembly on the outlet side much faster than it does on the inlet side. Because of the head loss across the barrier assembly 19 there is less pressure from the interior of the core toward the casing on the outlet side than there is on the inlet side.

Therefore the tube on the inlet side moves more slowly toward the core than does the tube on the outlet side.

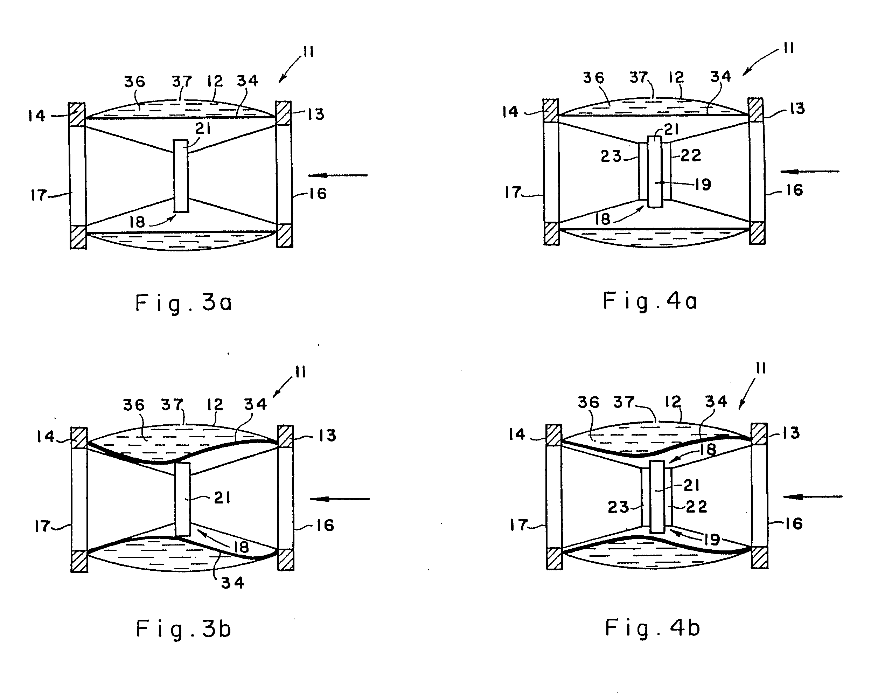

The relative motion of the tube towards the core when the compartment and the inlet have the same applied pressure is shown in Figs. 3 and 4. Initially when the control compartment pressure and inlet pressure are equal there is no distinguishable difference in the motion of the tube between the prior art valves and the inventive valves. This is illustrating by comparing Fig. 3a and Fig. 4a. In both figures the tube has moved to a relatively horizontal position and the compartment is filled with hydraulic fluid, i.e. water.

However, as the tube gets closer to the outlet corner of the cylindrical section 21 in the prior art valve, the head drop through the valve increases. Consequently, the pressure in the control chamber in the prior art valves forces the tube on the outlet side into juxtaposition with the cage at an ever accelerating rate. Thus, the outlet side tube drops down to the cage so as to cause the "water hammer" effect.

The new valve of Fig. 4 has the side conical section which slows the tubes descent on the outlet side thereby preventing water hammer.

Note that while sections 22 and 23 are shown as having conical shapes they could also be cylindrical, and produce the desired effects. Similarly they can be wall-like sections or disc-like sections. The major diameter of sections 22 and 23 should however be less than the diameter of central section 21. Also if one side of the valve is always the outlet then only one side section is required, that is of course on the outlet side.

The slots, shown as 24 and 26 are also important to mute the hammer effect. The slots can be of different sizes or more than one slot can be provided depending on the rating of the valve.

The valve provided retains the relatively small physical dimensions of the tube valves but by slowing the movement of the tube 34 on the outlet side, the hammer effect is minimized, or muted.

Accordingly a flowthrough tube valve is provided that does not suffer from the usual hammer effect which has been known to cause extensive damage to hydraulic systems as well as to the valve. The muting of the hammer effect is accomplished without enlarging the size of the valve and without materially changing the reaction time of the diaphragm.

While the principles of the invention have been described above in connection with the specific apparatus and applications, it is to be understood that this description is made by way of example only and not as a limitation on the scope of the invention.

**Claims**

1. A tube valve (11) for controlling hydraulic flow therethrough, said valve (11) comprising:

valve casing means (12, 13, 14),

first (16) and second (17) port means longitudinally spaced apart in said casing means (12, 13, 14),

a hollow support structure (18) having pervious walls extending in a longitudinal direction between said port means (16, 17),

an impervious barrier (19) transversing the longitudinal direction of said structure (18) positioned to cause hydraulic flow through said pervious walls and around said barrier (19),

resilient tube means (34) surrounding said structure (18) and extending substantially from port (16) to port (17),

said tube means (34) having a valve closed position abutting said barrier (19) thereby preventing flow around said barrier (19) and a valve opened position removed from said barrier (19) thereby enabling flow around said barrier (19),

said casing (12) and said tube means (34) defining a control chamber (36), and

aperture means (37) in said casing (12, 13, 14) to enable varying the pressure in said control chamber (36) to move said tube means (34) between said valve closed and said valve opened positions,

characterised in that said barrier (19) comprises a central member (21) against which said tube means (34) abuts when said valve is in said closed position, and at least a first side member (23) in contact with said central member (21) disposed on the side of the port (17), serving as the outlet port, the diameter of said central member (21) being greater than that of said first side member (23) whereby, as said tube means (34) moves toward said valve closed position, the differences between the diameters of said central member (21) and side member (23) of said barrier (19) result in the production of pressure, adjacent the central member (21) on the side of the outlet port (17), which dampens the hammer effect caused by said tube means (34) when moving from the valve open position to the valve closed position, by reducing the rate at which said tube means (34) comes into contact with said central member (21).

2. A tube valve as claimed in Claim 1, characterised in that said first side member (23) defines $n$ inwardly directed slots (26) from the outer periphery thereof where $n$ is an integer not less than one.

3. A tube valve as claimed in Claim 1 or Claim 2, characterised in that said first side member (23) is hollow.

4. A tube valve as claimed in Claim 1, characterised in that said first side member (23) is shaped as a truncated cone with the truncated top in contact with said central member (21) and with the diameter of the base of said truncated cone being less than the diameter of said central member (21),

and in that the pressure in the space defined between the exposed side of said central member (21), the exposed side of said truncated cone (23) and the tube means (34) when the latter moves toward said central member (21) to be in the valve closed position in the use of the valve means is greater than the pressure in the portion of said hollow support structure (12, 13, 14) between said barrier (19) and the port (17) serving as the outlet port and being less than the pressure in the structure portion between said barrier (19) and the port (16) serving as the inlet port.

5. A tube valve as claimed in Claim 4, characterised in that said truncated cone (23) has $n$ peripheral slots (26) extending inwardly from the base thereof, where $n$ is an integer not less than one.

6. A tube valve as claimed in Claim 4 or Claim 5, characterised in that the truncated cone (23) is hollow.

7. A tube valve as claimed in Claim 4, 5 or 6, characterised in that said barrier (19) includes a second side member (22) in the shape of a truncated cone that is disposed on the opposite side of said central member (21) and is substantially identical with said first side member (23).

8. A tube valve as claimed in Claim 7, characterised in that each of said truncated cones (22, 23) has $n$ peripheral slots (26, 24) extending inwardly from the base thereof, where $n$ is an integer not less than one.

9. A tube valve as claimed in Claim 7 or Claim 8, wherein each of the truncated cones (22, 23) is hollow.

10. A tube valve as claimed in Claim 1, characterised in that said first side member (23) is cylindrically shaped of preselected height with its diameter being less than that of said central member (21) and being coaxially aligned therewith, whereby said barrier (19) is shaped as a cylinder having a first portion (21) of a first diameter and a second portion (23), toward the outlet port (19), of a second diameter which is less than said first diameter.

11. A tube valve as claimed in Claim 10, characterised in that said barrier (19) includes a second side member (22), substantially identical to said first side member (23), said central (21) and side (22, 23) members being coaxial and the side members (22, 23) being on opposite sides of said central member (21).

12. A tube valve as claimed in Claim 11, characterised in that at least one of said side members (22, 23) defines $n$ peripheral slots (24, 26) extending from the side remote from said central member (21).

13. A tube valve as claimed in Claim 11 or Claim 12, characterised in that at least one of said side members (22, 23) is hollow.

**Patentansprüche**

1. Schlauchmembran-Ventil (11) zur Steuerung eines Hydraulikstromes, bestehend aus:

einem Ventilgehäuse (12, 13, 14),

einem Einlaß (16) und einem Auslaß (17), die im Längsabstand im Gehäuse (12, 13, 14) angeordnet sind,

einer hohlen Stützkonstruktion (18) mit durchlässigen Wänden, die sich in Längsrichtung zwischen dem Ein- und dem Auslaß (16, 17) erstreckt,

einer undurchlässigen Sperre (19), die quer zur Längsrichtung der Stützkonstruktion (18) zur Lenkung des Hydraulikstromes durch die durchlässigen Wände und um die Sperre (19) angeordnet ist,

einer die Stützkonstruktion (18) umgebenden und im wesentlichen zwischen Ein- und Auslaß (16, 17) verlaufenden elastischen Schlauchmembran (34), die eine an der Sperre (19) anliegende und dabei die Strömung um die Sperre (19) verhindernde Schließstellung und eine von der Sperre (19) abgehobene und dabie die Strömung um die Sperre (19) freigebende Offenstellung aufweist,

wobei das Gehäuse (12) und die Schlauchmembran (34) eine Steuerkammer (36) begrenzen, und

einer Öffnung (37) in dem Gehäuse (12, 13, 14) zur Beaufschlagung der Steuerkammer (36) mit variablem Druck zur Bewegung der Schlauchmembran (34) zwischen ihrer Schließ- und Offenstellung, dadurch gekennzeichnet, daß die Sperre (19) einen Zentralteil (21), an dem die Schlauchmembran (34) in der Schließstellung des Ventiles anliegt, und zumindest einen ersten Seitenteil (23) aufweist, der mit dem Zentralteil (21) in Berührung steht und an der Seite des Auslasses (17) angeordnet ist, wobei der Durchmesser des Zentralteiles (21) größer als derjenige des ersten Seitenteiles (23) ist, sodaß bei einer Bewegung der Schlauchmembran (34) in die Schließstellung die Unterschiede der Durchmesser des Zentralteiles (21) und des Seitenteiles (23) der Sperre (19) neben dem Zentralteil (21) an der Seite des Auslasses (17) ein Druck hervorgerufen wird, der die von der Schlauchmembran (34) bei ihrer Bewegung aus der Offen- in die Schließstellung hervorgerufene Schlagwirkung infolge Verminderung der Geschwindigkeit, mit der die Schlauchmembran (34) mit dem Zentralteil (21) in Berührung gelangt, dämpft.

2. Schlauchmembran-Ventil nach Anspruch 1, dadurch gekennzeichnet, daß der erste Seitenteil (23) n von seinem Außenumfang nach innen gerichtete Schlitze (26) begrenzt, wobei n eine nicht weniger als eins betragende ganze Zahl ist.

3. Schlauchmembran-Ventil nach Anspruch 1 oder 2, dadurch gekennzeichnet, daß der erste Seitenteil (23) hohl ist.

4. Schlauchmembran-Ventil nach Anspruch 1, dadurch gekennzeichnet, daß der erste Seitenteil (23) als Kegelstumpf gestaltet ist, dessen Deckfläche mit dem Zentralteil (21) in Berührung steht und dessen Durchmesser der Basis geringer als derjenige des Zentralteiles (21) ist, und daß der Druck in dem zwischen der freien Seite des Zentralteiles (21), der freien Seite des Kegelstumpfes (23) und der sich zum Zentralteil (21) bzw. in die Schließstellung bewegenden Schlauchmembran (34) begrenzten Raum in Betrieb des Ventiles größer als der Druck im Bereich der hohlen Stützkonstruktion (12, 13, 14) zwischen der Sperre (19) und dem Auslaß (17) sowie geringer als der Druck in der Stützkonstruktion zwischen der Sperre (19) und dem Einlaß (16) ist.

5. Schlauchmembran-Ventil nach Anspruch 4, dadurch gekennzeichnet, daß der Kegelstumpf (23) n von seiner Basis nach innen verlaufende periphere Schlitze (26) aufweist, wobei n eine nicht weniger als eins betragende ganze Zahl ist.

6. Schlauchmembran-Ventil nach Anspruch 4 oder 5, dadurch gekennzeichnet, daß der Kegelstumpf (23) hohl ist.

7. Schlauchmembran-Ventil nach Anspruch 4, 5 oder 6, dadurch gekennzeichnet, daß die Sperre (19) einen zweiten Seitenteil (22) in Form eines Kegelstumpfes aufweist, der an der gegenüberliegenden Seite des Zentralteiles (21) angeordnet und mit dem ersten Seitenteil (23) im wesentlichen ident ist.

8. Schlauchmembran-Ventil nach Anspruch 7, dadurch gekennzeichnet, daß jeder der Kegelstümpfe (22, 23) n von der Basis nach innen verlaufende periphere Schlitze (26, 24) aufweist, wobei n eine nicht weniger als eins betragende ganze Zahl ist.

9. Schlauchmembran-Ventil nach Anspruch 7 oder 8, dadurch gekennzeichnet, daß jeder der Kegelstümpfe (22, 23) hohl ist.

10. Schlauchmembran-Ventil nach Anspruch 1, dadurch gekennzeichnet, daß der erste Seitenteil (23) zylindrisch gestaltet ist und eine vorbestimmte Höhe sowie einen Durchmesser aufweist, der geringer als derjenige des Zentralteiles (21) ist, und zu dem Zentralteil (21) koaxial angeordnet ist, wobei die Sperre (19) als Zylinder mit einem ersten Abschnitt (21) mit einem ersten Durchmesser und einem auslaßseitigen zweiten Abschnitt (23) mit einem zweiten Durchmesser ausgestaltet ist, der geringer als der erste Durchmesser ist.

11. Schlauchmembran-Ventil nach Anspruch 10, dadurch gekennzeichnet, daß die Sperre (19) einen im wesentlichen mit dem ersten Seitenteil (23) identen zweiten Seitenteil (22) aufweist, wobei der Zentralteil (21) und die Seitenteile (22, 23) koaxial angeordnet sind und die Seitenteile (22, 23) an gegenüberliegenden Seiten des Zentralteiles (21) angeordnet sind.

12. Schlauchmembran-Ventil nach Anspruch 11, dadurch gekennzeichnet, daß zumindest einer der Seitenteile (22, 23) n sich von der dem Zentralteil (21) abliegenden Seite erstreckende periphere Schlitze (24, 26) begrenzt.

13. Schlauchmembran-Ventil nach Anspruch 11 oder 12, dadurch gekennzeichnet, daß zumindest einer der Seitenteile (22, 23) hohl ist.

**Revendications**

1. Une vanne tubulaire (11) pour commander un écoulement hydraulique la traversant, ladite vanne (11) comprenant:
— un carter de vanne (12, 13, 14),
— un premier (16) et un second (17) orifices espacés longitudinalement l'un de l'autre dans ledit carter (12, 13, 14),
— une structure portante creuse (18) comportant des parois perméables s'étendant dans une direction longitudinale entre lesdits orifices (16, 17),
— une barrière imperméable (19) orientée transversalement à la direction longitudinale de ladite structure (18) et positionnée de façon à obliger l'écoulement hydraulique à passer au travers desdites parois perméables et autour de ladite barrière (19),

— des moyens tubulaires élastiques (34) entourant ladite structure (18) et s'étendant sensiblement d'un orifice (16) à l'autre (17),

— lesdits moyens tubulaires (34) comportant une position de fermeture de vanne où elle vient buter contre ladite barrière (19) en empêchant ainsi un écoulement autour de ladite barrière (19), une position d'ouverture de vanne où elle est écartée de ladite barrière (19) en permettant ainsi un écoulement autour de ladite barrière (19),

— ledit carter (12) et lesdits moyens tubulaires (34) définissant une chambre de commande (36), et

— une ouverture (37) ménagée dans ledit carter (12, 13, 14) pour permettre une variation de la pression dans ladite chambre de commande (36) pour le déplacement de lesdits moyens tubulaires (34) entre lesdites positions de fermeture de vanne et d'ouverture de vanne, caractérisée en ce que ladite barrière (19) comprend un élément central (21) contre lequel lesdits moyens tubulaires (34) viennent buter quand ladite vanne se trouve dans ladite position fermée, et au moins un premier élément latéral (23) en contact avec ledit élément central (21), disposé sur le côté de l'orifice, servant d'orifice de sortie, le diamètre dudit élément central (21) étant supérieur à celui du premier élément latéral (23) de façon que, lorsque lesdits moyens tubulaires (34) se déplace en direction de ladite position de fermeture de vanne, les différences entre les diamètres dudit élément central (21) et dudit élément latéral (23) de ladite barrière (19) produisent une pression, dans une zone adjacente à l'élément central (21) et située du côté de l'orifice de sortie (17), qui amortit l'effet de coup de bélier provoqué par ladite partie tubulaire (34) lorsqu'elle se déplace de la position d'ouverture de vanne dans la position de fermeture de vanne en réduisant la vitesse à laquelle lesdits moyens tubulaires (34) entre en contact avec ledit élément central (21).

2. Une vanne tubulaire telle que revendiquée dans la revendication 1, caractérisée en ce que ledit premier élément latéral (23) définit $n$ fentes (26) dirigées vers l'intérieur à partir de sa périphérie extérieure, où $n$ est un nombre entier non inférieur à un.

3. Une vanne tubulaire telle que revendiquée dans la revendication 1 ou la revendication 2, caractérisée en ce que ledit premier élément latéral (23) est creux.

4. Une vanne tubulaire telle que revendiquée dans la revendication 1, caractérisée en ce que ledit premier élément latéral (23) a le profil d'un tronc de cône, la partie supérieur tronquée étant en contact avec ledit élément centrale (21) et le diamètre de la base du tronc de cône étant inférieur au diamètre dudit élément central (21), et en ce que la pression dans l'espace défini entre le côté exposé dudit élément central (21), le côté exposé dudit tronc de cône (23) et les moyens tubulaires (34) quand cette dernière se déplace en direction dudit élément central (21) pour se placer dans la position de fermeture de vanne lors de l'utilisation de la vanne, et supérieure à la pression dans la partie de ladite structure portante creuse (12, 13, 14) située entre ladite barrière (19) et l'orifice (17) servant d'orifice de sortie et est inférieure à la pression régnant dans la partie de structure comprise entre ladite barrière (19) et l'orifice (16) servant d'orifice d'entrée.

5. Une vanne tubulaire telle que revendiquée dans la revendication 4, caractérisée en ce que ledit tronc de cône (23) comporte $n$ fente périphériques (26) s'étendant vers l'intérieur à partir de sa base, où $n$ est un nombre entier non inférieur à un.

6. Une vanne tubulaire telle que revendiquée dans la revendication 4 ou la revendication 5, caractérisée en ce que le tronc de cône (23) est creux.

7. Une vanne tubulaire telle que revendiquée dans les revendications 4, 5 ou 6, caractérisée en ce que ladite barrière (19) comprend un second élément latéral (22) en forme de tronc de cône et disposé sur le côté opposé dudit élément central (21) et qui est sensiblement identique audit premier élément latéral (23).

8. Une vanne tubulaire telle que revendiquée dans la revendication 7, caractérisée en ce que chacun desdits troncs de cône (22, 23) comportent $n$ fentes périphériques (26, 24) s'étendant vers l'intérieur à partir de leurs bases, où $n$ est un nombre entier non inférieur à un.

9. Une vanne tubulaire telle que revendiquée dans la revendication 7 ou la revendication 8, dans laquelle chacun des troncs de cône est creux.

10. Une vanne tubulaire telle que revendiquée dans la revendication 1, caractérisée en ce que ledit premier élément latéral (23) a une forme cylindrique d'une hauteur présélectionnée dont le diamètre est inférieur à celui de l'élément central (21) et qui est aligné coaxialement avec celui-ci, ladite barrière (19) ayant la forme d'un cylindre comportant une première partie (21) d'un premier diamètre et une seconde partie (23), tournées vers l'orifice de sortie (19) et ayant un second diamètre qui est inférieur audit premier diamètre.

11. Une vanne tubulaire telle que revendiquée dans la revendication 10, caractérisée en ce que ladite barrière (19) comprend un second élément latéral (22), sensiblement identique audit premier élément latéral (23), lesdits éléments central (21) et latéraux (22, 23) étant coaxiaux et les éléments latéraux (22, 23) étant situés sur des côtés opposés dudit élément central (21).

12. Vanne tubulaire telle que revendiquée dans la revendication 11, caractérisée en ce qu'au moins un desdits éléments latéraux (22, 23) définit $n$ fentes périphériques (24, 26) s'étendant à partir du côté éloigné dudit élément central (21).

13. Vanne tubulaire telle que revendiquée dans la revendication 11 ou la revendication 12, caractérisée en ce qu'au moins un desits éléments latéraux (22, 23) est creux.

Fig. 1

0 061 252

Fig.2

2

Fig. 3a

Fig. 4a

Fig. 3b

Fig. 4b

0 061 252